# EUROPEAN PATENT SPECIFICATION

(11) **EP 0 618 395 B1**
(45) Date of publication and mention of the grant of the patent: **06.08.1997**
(21) Application number: 94104408.3
(22) Date of filing: 21.03.1994
(51) Int. Cl.: F16L 47/00

(54) **Method of manufacturing a one-piece tubular connection element.**
Verfahren zum Herstellung eines einteiligen rohrförmigen Verbindungselements.
Procédé de fabrication d'un élément d'assemblage tubulaire.

(30) Priority: 01.04.1993 IT MI930654
(43) Date of publication of application: 05.10.1994
(73) Proprietor: COLNAGO ERNESTO & C. S.r.l., 20040 Cambiago (Milano) (IT); F.I.C. FABBRICA ITALIANA COMPOSITI S.r.l., 20088 Rosate (Milano) (IT)
(72) Inventor: Colnago, Ernesto, I-20040 Cambiago, Milan (IT); Scotti, Primino, I-27022 Casorate Primo (Pavia) (IT)
(74) Representative: Luksch, Giorgio, Dr.-Ing.

(56) References cited:
- EP-A- 0 436 805
- DE-A- 2 823 644
- GB-A- 2 083 880
- GB-A- 2 126 300
- US-A- 4 106 797
- US-A- 4 504 086
- US-A- 5 108 135

## Description

This invention relates to a method for forming one-piece connection elements of composite material or comprising fibres of material such as carbon, glass, boron aramid or the like, said elements being suitable for use in connecting together parts of a framework structure or tubular pieces.

Connection elements or connectors of composite material are already known. Each connector consists of two shells, each comprising one or more composite material fabric layers impregnated with usual bonding material (synthetic resin, such as epoxy resin, chosen on the basis of the composite material of the fabrics).

The connector is formed by placing for example the plurality of fabrics for each shell in a respective half-mould, then coupling the half-moulds together with one or more cores between them, and subjecting the assembly to pressure and to heating in an oven to achieve mutual adhesion between the fabric layers and polymerization of the synthetic resin. On opening the two half-moulds the connector is removed, after which the said core or cores are extracted from it.

This method therefore enables a connector to be obtained which however is defined by at least two portions which are physically separate from each other. This can result in opening of the connector if subjected to particularly high torsional bending forces of pulse type.

This known method can also form connectors in which the two portions comprise composite material fabric layers which are not perfectly joined together and therefore physically separate from each other. Again for this reason, the connectors of the said state of the art have a limited capacity to resist localized and/or high intensity mechanical forces.

GB-A-2.126.300 discloses a method for obtaining a pipe-tee by winding resin impregnated glass fibers (in roving form) around a T-shaped mandrel to cover the mandrel completely, thus obtaining a pipe-tree having a one-piece continuous structure. The mandrel is an expendable one, which is frangible, soluble, or incorporable but not recoverable and reusable.

US-A-4,106,797 discloses a recoverable and reusable support for obtaining a tee fitting of cured resin and reinforcing glass filaments. The known method provides separate windings of resin impregnated glass filaments on the transverse portion of the tee and on the leg of the tee. The resulting structure is not a one-piece continuous structure.

An object of the present invention is to provide a method for forming connectors of composite material which resist any mechanical force, even of considerable intensity, directly or indirectly acting on them.

A further object is to provide a method which enables a connector of the aforesaid type to be obtained having a uniform structure in every portion.

These and further objects which will be apparent to the expert of the art are attained by a method in accordance with claim 1.

The said objects are also attained by a device embodying the characteristics described in the corresponding independent device claim.

The aforesaid objects are also attained by a connector or connection element as characterised in the relative independent claim.

The invention will be more apparent from the accompanying drawing, which is provided by way of non-limiting example and in which:
Figure 1 is a perspective view of a device for forming a connector according to the invention for connecting three tubular elements together;
Figure 2 is a section on the line 2-2 of Figure 1;
Figure 3 is a perspective view of a connector according to the invention; and
Figures 4 to 7 show different embodiments of a step in the method of the invention.

With reference to said figures, a connector according to the invention is indicated overall by 1 and is formed of composite material, consisting for example of carbon, glass or boron fibres. The material can also be of the type known as Kevlar®. In the case of fibres, these are impregnated with synthetic resin (for example epoxy resin), used as the binder.

The connector 1 comprises a part 2 to be known as the central part, from which in the embodiment under examination there projects an arm or projection 3. The connector is hollow at least at the ends 2A, 2B and 3A of its various parts where it receives the ends of tubular elements.

The connector is in one piece, ie its individual parts are not physically distinct from each other and its constituent composite material does not present any discontinuity in any of these parts or in passing from one part to another.

The connector 1 is formed by a device 5 comprising a pin or portion 7 removably fixable to a stem 8 by fixing means such as a screw 9 or the like (for example a bolt or a snap-coupled or torsion-coupled pin).

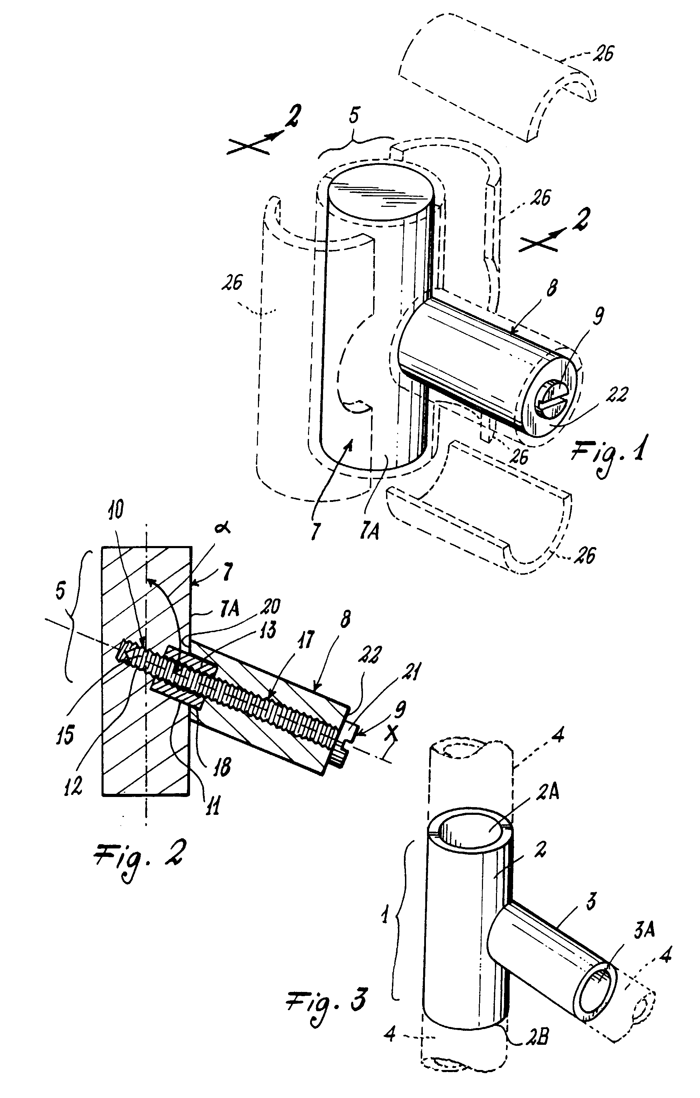

Specifically (see Figures 1 and 2), the pin 7 or main support means is cylindrical and comprises a dead hole 10 opening into its lateral surface 7A. This hole is preferably of stepped form, hence comprising two portions 11 and 12. The portion 11 is arranged to partially receive a threaded bush or nut 13, whereas the portion 12 is threaded to cooperate with the end 15 of the screw 9.

The stem 8 or secondary support means comprises a through hole 17 (which can be threaded, as in the illustrated embodiment) to receive the screw 9, said through hole widening at 18 in proximity to that end 20 of the stem which is shaped to cooperate with the surface 7A of the pin 7. That portion of the bush 13 projecting from said pin sits in the part 18 of the hole 17. The head 21 of the screw 9 projects from that end 22 of the stem 8 distant from said end 20.

It should be noted that the hole 10 in the pin 7 and the corresponding hole 17 in the stem 8 are coaxial, the axis X of this latter forming an angle α with the longitudinal axis Y of the pin 7 (see Figure 2). This angle can vary on the basis of the required inclination of the stem 8 to the pin 7, ie the desired inclination of the arm 3 to the part 2 of the connector. This clearly depends on the use of the connector, for example in a lattice structure such as a bicycle frame or an aeronautical structure in which the connectors of the invention can be used. Preferably, one and the same main support means can comprise several holes 10 with their axes X forming different angles α with the axis Y, which holes can be used for fixing corresponding secondary support means at different inclinations to the main support means.

The implementation of the method of the invention is described hereinafter with reference to one method for forming the connector of Figure 3.

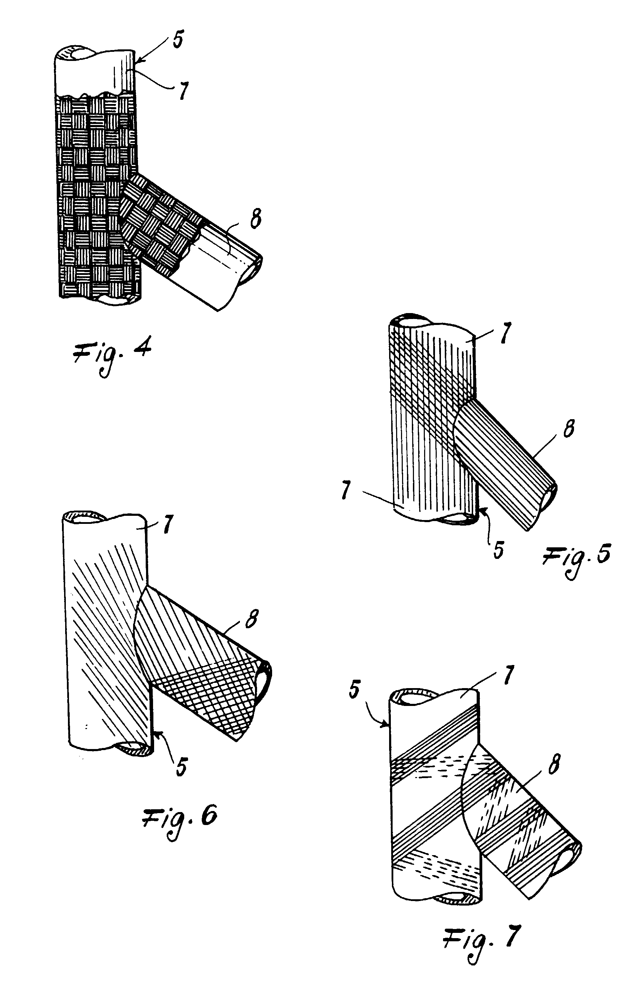

To form this connector, a device 5 is firstly constructed having the same shape as that of the connector to be formed, the untreated composite material or rather the untreated fibre of the material to form its base (for example carbon fibre) then being arranged on it with continuity. As can be seen from Figures 4, 5, 6 and 7, the said arrangement is achieved for example by wrapping the pin 7 and stem 8 without any interruption in continuity, with one or more layers of a composite material fabric (Figure 4) or of a single fibre arranged along the longitudinal axes (X and Y) of said pin and said stem (Figure 5). Alternatively said wrapping can be effected by arranging a first layer of fibre as in Figure 5 and then a second layer of the same fibre so that this latter layer lies perpendicular to the first layer (see Figure 6).

As a further alternative, shown in Figure 7, the fibre can be wound as a spiral about the pin 7 and stem 8.

When the device has been wrapped with continuity using fabric or fibre (unidirectional or not) such that the thickness of the covering is uniform, this latter is impregnated with a usual resin acting as a binder, such as epoxy resin.

The assembly is then enclosed between semirigid shells 26 of such shape as to mate with that of the device 5 and hence of the connector 1 to be obtained. This partial rigidity of the shells 26 is necessary so that with the subsequent steps of the method of the invention a proper compacting of the fibres or of the composite material is obtained together with an optimum surface finish of the final product (connector). The shells 26 can be of metal or of composite materials, for example based on carbon fibres or Kevlar®.

After covering the device 5 and the composite material on it with the shells 26, the assembly is placed in an environment in which vacuum is created in any known manner. The said assembly is left in this environment for a time of between 1 and 3 hours to enable the composite material to adhere to the pin 7 and stem 8 and to expose any covering thicknesses present on the device (these being possibly then compensated by usual finishing operations).

The assembly defined by the device 5, the covering and the shells 26 is then placed in an environment (for example an autoclave) in which it is subjected for a time of between 1 and 3 hours to a suitable pressure, for example between 2 and 12 bars, to achieve further compacting of the composite material. After this, said assembly is placed in an oven in which the composite material undergoes polymerization. In this oven the temperature is maintained preferably within the range of 100°C to 400°C, depending on the resin used in said material. Said assembly is kept in the oven for a time of between 1 and 5 hours, depending on the resin used for forming the composite material.

On termination of this process and by suitable choice of the time, temperature and pressure parameters, the composite material has hardened to hence form the connector 1. It should be noted that pressure can be exerted on the shells by any means known to the average expert of the art, for example mechanically, pneumatically or hydraulically.

After the said process, the shells are removed from the covering and the stem 8 is removed by operating the screw 9. The stem separates from the pin 7 to also take with it the bush 13. The stem and the pin are then withdrawn from the ends 3A and 2A or 2B of the connector, which is then in its final form.

The connector is therefore in one piece and comprises no physically detectable discontinuities (ie even a thorough examination does not show it to comprise two or more layers). If the device 5 is wrapped with a single fibre (as in Figures 5, 6 and 7), its winding is effected such as to vary the fibre orientation in its successive passages through one and the same point, so as to make the structure of the connector 1 more resistant to mechanical stresses arriving from different directions.

One embodiment of the invention and its implementation have been described. Further embodiments are possible and are to be considered as falling within the scope of the claim.

## Claims

1. A method for forming a one-piece tubular connection element comprising a central part (2) and a laterally extending part (3), the element being of composite material or of carbon, glass or boron, said element being suitable for use in connecting together parts of a framework structure or tubular pieces, wherein on a support (5) reproducing the shape of the connection element (1) there is laid without interruption of continuity at least one layer of untreated composite material, and comprising the following succession of treating steps:
**a)** impregnating the material with bonding material after its winding on the support (5) to obtain an impregnated roughcast, said support being of a plurality of parts (7, 8, 12, 13, 17) separably secured together;
**b)** enclosing the impregnated roughcast on the support (5) in semirigid shells (26) mating the outer form of the connection element (1);
**c)** subjecting the enclosed impregnated roughcast first to vacuum and then, in the specified order, to pressure and heating to solidify the material, and removing the shells and separating into its constituent parts (7, 8, 12, 13, 17) the support (5); and
d) removing the support to leave a one-piece tubular connector.

## Patentansprüche

1. Verfahren zur Herstellung eines einstückigen, rohrförmigen Verbindungselementes, das ein Mittelteil (2) und ein sich zur Seite erstreckendes Teil (3) enthält, wobei des Element aus Verbundwerkstoff oder aus Kohlenstoff-, Glas- oder Borfasern besteht, wobei das Element geeignet ist, um zur Verbindung von Teilen einer Rahmenkonstruktion oder von rohrförmigen Teilen verwendet zu werden, wobei an einem Träger (5), der die Form des Verbindungselementes (1) wiedergibt, ohne Unterbrechung zumindest eine Schicht eines unbehandelten Verbundwerkstoffs aufgelegt wird, und das die folgende Abfolge von Behandlungsschritten umfaßt:
a) Tränken des Werkstoffs mit einem Bindemittel, nachdem es auf den Träger (5) gelegt ist, um eine getränkte Schicht zu erhalten, wobei der Träger eine Anzahl von Teilen (7, 8, 12, 13, 17) umfaßt, die einzeln miteinander verbunden sind;
b) Einschließen der sich auf dem Träger (5) befindlichen, getränkten Schicht in halbstarren Schalen (26), die mit der Außenform des Verbindungselementes (1) zusammenpassen;
c) Aussetzen der eingeschlossenen getränkten Schicht zuerst einem Vakuum und dann in einer bestimmten Reihenfolge einem Druck und einer Erwärmung, um das Material zu verfestigen, Entfernen der Schalen und Zerlegen des Trägers (5) in seine einzelnen Teile (7, 8, 12, 13, 17), und
d) Entfernen des Trägers, damit ein einstückiges, rohrförmiges Verbindungselement verbleibt.

## Revendications

1. Procédé de fabrication d'un élément d'assemblage tubulaire monobloc comprenant une partie centrale (2) et une partie s'étendant latéralement(3), l'élément étant en matériau composite, en carbone, en verre ou en bore, ledit élément étant susceptible d'être utilisé pour relier entre elles des parties d'une construction en cadre ou des pièces tubulaires, caractérisé en ce que, sur un support (5) reproduisant la forme de l'élément d'assemblage (1), est disposée sans discontinuité une couche au moins de matériau composite non traité, et en ce qu'il comprend la séquence suivante d'étapes de traitement :
a) l'imprégnation du matériau avec un liant, après son enroulement sur le support (5), afin d'obtenir une ébauche de moulage imprégnée, ledit support étant constitué de plusieurs pièces élémentaires (7, 8, 12, 13, 17) fixées entre elles ;
b) la mise en place de coquilles semi-rigides (26) correspondant à la forme extérieure de l'élément d'assemblage (1) et enfermant l'ébauche de moulage imprégnée recouvrant le support (5) ;
c) la mise sous vide préalable de l'ébauche de moulage imprégnée, avant d'effectuer dans l'ordre suivant : une mise sous pression et un chauffage pour solidifier le matériau, l'enlèvement des coquilles, puis le démontage du support (5) en ses différentes pièces élémentaires (7, 8 , 12, 13, 17) ; et
d) l'enlèvement du support pour donner l'élément d'assemblage tubulaire monobloc.
